# EUROPÄISCHE PATENTSCHRIFT

(11) **EP 3 681 768 B1**
(45) Veröffentlichungstag und Bekanntmachung des Hinweises auf die Patenterteilung: **10.11.2021**
(21) Anmeldenummer: 19728317.9
(22) Anmeldetag: 17.05.2019
(51) Int. Cl.: B60R 21/215

(54) **AIRBAGANORDNUNG**
AIRBAG ASSEMBLY
SYSTÈME DE SAC GONFLABLE

(30) Priorität: 24.08.2018 DE 102018006703
(43) Veröffentlichungstag der Anmeldung: 22.07.2020
(73) Patentinhaber: K.L. Kaschier- und Laminier GmbH, 48455 Bad Bentheim-Gildehaus (DE)
(72) Erfinder: SCHULZE WEHNINCK, Rembert, 82327 Tutzing (DE); RORING, Albert, 48599 Gronau-Epe (DE)
(74) Vertreter: Cohausz Hannig Borkowski Wißgott
(86) Internationale Anmeldenummer: PCT/EP2019/000154
(87) Internationale Veröffentlichungsnummer: WO 2020/038597

(56) Entgegenhaltungen:
- EP-A1- 2 096 006
- US-A1- 2006 043 701
- US-B1- 6 955 376

## Beschreibung

Die Erfindung betrifft eine Airbaganordnung mit einer über dem Schusskanal des Airbags angeordneten Airbagdurchtrittsöffnung, die mit mindestens einer Airbagklappe und einer über der Airbagklappe befestigten insbesondere aufgespritzten Abdeckung aus Kunststoff verschlossen ist, wobei die Abdeckung am Rand der Airbagklappe mindestens eine Sollbruchlinie aufweist, um das Entfalten des Airbagkissens zu ermöglichen, und wobei die Airbagklappe über eine Gelenkstelle mit einer Klappenstützwand angeformt verbunden ist, die auf der Innenseite der Schusskanalwand befestigt anliegt.

Eine Airbaganordnung dieser Art ist aus der EP 2 727 775 A1 bekannt. Bei Airbags ist dafür zu sorgen, dass das Airbagkissen beim Entfalten und Öffnen des Schusskanals möglichst geringen Widerstandskräften ausgesetzt ist, so dass das Ausbreiten des Airbagkissens schnell und störungsfrei erfolgt.

Aufgabe der Erfindung ist es, eine Airbaganordnung der eingangs genannten Art so zu verbessern, dass das Airbagkissen bei seinem Entfalten und Austreten aus dem Schusskanal geringen Widerstandskräften ausgesetzt ist.

Diese Aufgabe wird erfindungsgemäß dadurch gelöst, dass im Schusskanal zwischen Airbagkissen und Airbagklappe ein zusätzliches Flächenelement (als Cover) einliegt, das die Airbagklappe und die Innenseite der Schusskanalwand zumindest teilweise abdeckt.

Das zusätzliche Flächenelement sorgt insbesondere aufgrund seiner sehr glatten Oberfläche für ein sicheres und störungsfreies Austreten des sich entfaltenden Prallkissens. Und dies bei einer hohen Stabilität des Flächenelements in allen Temperaturbereichen und einem sicheren Halt des Flächenelements im Schusskanal nach Auslösen des Airbags.

Das zusätzliche Flächenelement ist beim Austreten und Entfalten des Prallkissens sicher im Schusskanal gehalten, wenn das zusätzliche Flächenelement mit der Schusskanalwand und/oder mit der Airbagklappe verbunden insbesondere verschweißt ist. Hierzu kann das untere Ende des Flächenelements mit dem unteren Ende der Schusskanalwand formschlüssig verbunden sein. Dabei kann das untere Ende des Flächenelements das untere Ende der Schusskanalwand oder der Klappenstützwand untergreifen. Alternativ oder zusätzlich kann das Flächenelement eine seitliche Zunge aufweisen, die einen seitlichen Vorsprung der Schusskanalwand oder der Klappenstützwand hintergreift.

Das Flächenelement weist eine hohe Festigkeit auf und ist auch bei hohen Temperaturen maßstabil, wenn das Flächenelement aus einem Verbundwerkstoff besteht mit mindestens einer Lage aus Kunststoffbändern oder -fasern insbesondere aus thermoplastischem Polypropylen oder Polyester. Hierbei können die Kunststoffbänder oder -fasern ein Gewebe bilden.

Das Flächenelement erhält beim Öffnen eine zusätzliche Wegstrecke, wenn im Bereich der Gelenkstelle das Flächenelement ein Materialreservoir in Form einer Faltung oder Wellung längs der Gelenkstelle aufweist, durch die das Flächenelement in seiner Länge nach außen hin streckbar ist. Dies erleichtert ein Verschwenken des Flächenelements und verhindert ein Abreißen.

Für die Funktion des Flächenelements ist von Bedeutung, dass die dem Prallkissen zugewandte Außenfläche des Flächenelements als Gleitfläche eine hohe Oberflächenglätte aufweist. Diese hohe Oberflächenglätte sorgt dafür, dass die von dem Prallkissen erzeugten Reibungskräfte abgleiten.

Ausführungsbeispiele der Erfindung sind in den Zeichnungen schematisch im Schnitt dargestellt und werden im Folgenden näher beschrieben. Es zeigen
- Fig. 1: den abgedeckten Schusskanal mit einem Flächenelement, das mit seiner Zunge einen Vorsprung der Schusskanalwand untergreift,
- Fig. 2: einen Ausschnitt aus Fig. 1, bei dem die Zunge des Flächenelements einen Vorsprung der Klappenstützwand untergreift,
- Fig. 3: einen Ausschnitt aus Fig. 1, bei dem das untere Ende des Flächenelements das untere Ende der Schusskanalwand untergreift.

Die Airbaganordnung besitzt einen das Prallkissen 7 aufnehmenden Raum 12, der den Schusskanal bildet, von Schusskanalwänden 9 umgeben ist und von einer Abdeckung 2 verschlossen ist, die Sollbruchlinien 2a aufweist. Die Abdeckung 2 bildet eine Airbagdurchtrittsöffnung, wenn nach Auslösen des Prallkissens 7 die Abdeckung 2 an den Sollbruchlinien aufreißt und nach außen aufklappt. Hierbei bleibt die von der Abdeckung 2 gebildete Klappe mit einem Rand, das ein Gelenk 11 bildet, an der übrigen Abdeckung befestigt.

Die Abdeckung 2 ist von einer Schaumschicht 5 bedeckt, auf der außen ein dekoratives Oberflächenmaterial 6 aufliegt.

Auf der Unterseite der Abdeckung 2 ist mindestens eine Airbagklappe 1 befestigt, wobei die Abdeckung 2 auf die Airbagklappe 1 aufgespritzt ist. Das Material der Airbagklappe 1 und das Herstellungsverfahren sind in der EP 2 727 775 A1 beschrieben.

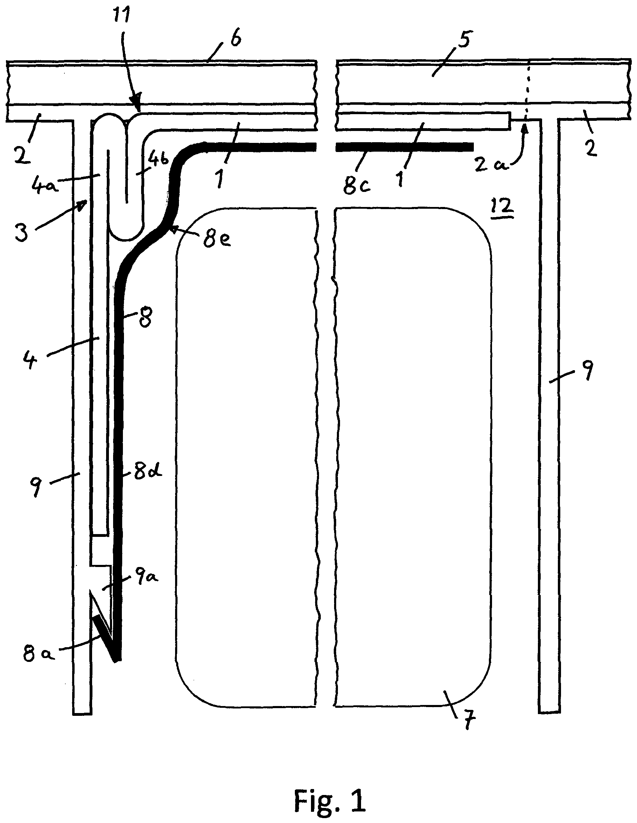

Die Airbagdurchtrittsöffnung ist, wie in Fig. 1 dargestellt, durch eine einzige Airbagklappe 1 verschlossen, die die Gelenkstelle 11 aufweist. Es können aber auch zwei Airbagklappen mit an gegenüberliegenden Seiten angeordneten Gelenkstellen angeordnet sein. Die Airbagklappe(n) ist/sind jeweils über die Gelenkstelle 11 an eine Klappenstützwand 4 angeformt, die sich in das Innere des Raums 12 und damit des Schusskanals erstreckt. Hierbei liegt die Klappenstützwand 4 an der Innenfläche der Schusskanalwand 9 an und ist an dieser befestigt. Im Bereich der Gelenkstelle 11 weist die Klappenstützwand 4 eine Faltung 3 mit Falten 4a und 4b auf, so dass beim Öffnen und Hochschwenken der Airbagklappe 1 diese eine zusätzliche Wegstrecke nach außen erhält.

Im von den Schusskanalwänden 9 gebildeten Raum 12 liegt ein Flächenelement 8 zusätzlich ein, das mit seinem oberen Flächenbereich 8c die Unterseite der Airbagklappe 1 zumindest zu einem größeren Teil abdeckt, hierbei aber mit seinem zwischen dem gefalteten Prallkissen 7 und Airbagklappe 1 liegenden Bereich 8c weder an dem Prallkissen noch an der Airbagklappe 1 befestigt ist. Alternativ ist der obere Bereich 8c des Flächenelements 8 an der Airbagklappe 1 befestigt insbesondere angeschweißt.

Das Flächenelement 8 weist einen unteren Flächenbereich 8d auf, der sich in das Innere des Raums 12 entlang einer Schusskanalwand 9 erstreckt. Beim Entfalten des Prallkissens 7 drückt dieses gegen den Bereich 8c und verschwenkt den Bereich 8c mit der Airbagklappe 1 nach außen. Hierbei ist der Bereich 8c von dem unteren Bereich 8d des Flächenelements gehalten. Der Verbindungsbereich zwischen den Bereichen 8c und 8d weist einen gewellten Bereich 8e auf, der ein Flächenreservoir bildet, durch das das Flächenelement 8 um eine zusätzliche Weglänge streckbar ist, wenn das Prallkissen 7 den oberen Bereich nach außen drückt. Hierbei kann das Flächenelement 8 statt des gewellten Bereichs 8e auch eine Faltung als Wegreservoir aufweisen, ähnlich der Faltung 3 der Klappenstützwand 4.

Damit das Flächenelement 8 während des Entfaltens des Prallkissens 7 sicher gehalten ist und nicht in den Kfz.-Innenraum hineinfliegt, ist der untere Flächenbereich 8d an der Schusskanalwand 9 und/oder an der Klappenstützwand 4 befestigt. In der Ausführung nach Fig. 1 weist hierzu die Schusskanalwand 9 einen zum Inneren des Raums 12 vorstehenden Vorsprung 9a auf, der von einem Vorsprung insbesondere einer Zunge 8a des Bereichs 8d untergriffen ist.

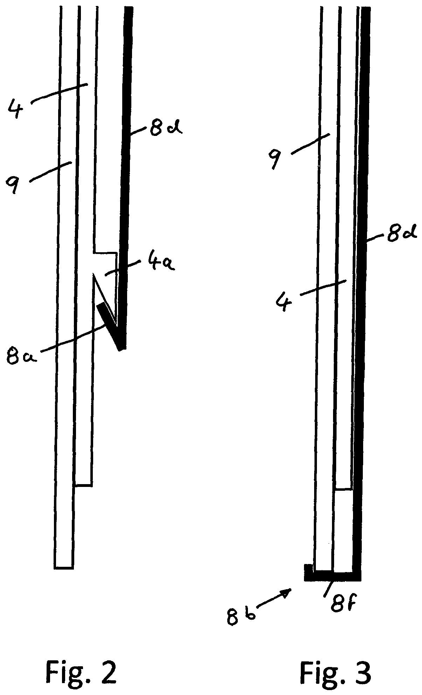

In der in Fig. 2 dargestellten Ausführung weist die Klappenstützwand 4 an ihrer Innenfläche einen in den Raum 12 vorstehenden Vorsprung 4a auf, der von einem Vorsprung insbesondere einer Zunge 8a des Bereichs 8d untergriffen ist. In der in Fig. 3 dargestellten Ausführung weist das Flächenelement 8 an dem unteren Ende 8b des Flächenbereichs 8d eine zweifache U-förmige Umbiegung 8f auf, die das untere Ende der Schusskanalwand 9 untergreift. In einer weiteren, nicht dargestellten Ausführung untergreift das untere Ende 8b des Flächenelements 8 das untere Ende der Klappenstützwand 4. Bei beiden Ausführungen, bei denen das untere Ende 8b untergriffen wird, können an dem unteren Ende der Klappenstützwand 4 und der Schusskanalwand 9 Zapfen vorstehen, die in Öffnungen im unteren Bereich des untersten Endes 8b des Flächenbereichs 8d eingreifen, um einen sicheren Halt des Flächenelements 8 zu erreichen.

Bei allen Ausführungen erreicht das Flächenelement 8 einen sicheren Halt im Schusskanal, da es aus einem stabilen Material besteht. Es ist ein Verbundwerkstoff (Komposit) aus mindestens zwei Lagen als Verbundwerkstoff mit mindestens einer Lage aus Kunststoffbändern oder -fasern insbesondere aus thermoplastischem Polypropylen oder Polyester. Dabei bilden die Kunststoffbänder oder -fasern ein festes Gewebe als geschlossenes textiles Material, bei dem aufgrund einer hohen Erwärmung die Bänder/Fasern miteinander verschmelzen. Zusätzlich kann das Flächenelement 8 ein- oder beidseitig mit einer Kleberfolie beschichtet sein.

Bei allen obigen Beschreibungen und zeichnerischen Darstellungen und Angaben in den Ansprüchen ist zu beachten, dass die Gelenkstellen, Faltungen, Wellungen und Umbiegungen sich vorzugsweise über die gesamte Länge der jeweiligen Teile bzw. Gegenstände erstrecken.

## Patentansprüche

1. Airbaganordnung mit einer über dem Schusskanal des Airbags angeordneten Airbagdurchtrittsöffnung, die mit mindestens einer Airbagklappe (1) und einer über der Airbagklappe (1) befestigten insbesondere aufgespritzten Abdeckung (2) aus Kunststoff verschlossen ist, wobei die Abdeckung (2) am Rand der Airbagklappe (1) mindestens eine Sollbruchlinie (2a) aufweist, um das Entfalten des Airbagkissens (7) zu ermöglichen, und wobei die Airbagklappe (1) über eine Gelenkstelle (11) mit einer Klappenstützwand (4) angeformt verbunden ist, die auf der Innenseite der Schusskanalwand (9) befestigt anliegt, **dadurch gekennzeichnet, dass** im Schusskanal zwischen Airbagkissen (7) und Airbagklappe (1) ein zusätzliches Flächenelement (8) als Cover einliegt, das die Airbagklappe (1) und die Innenseite der Schusskanalwand (9) zumindest teilweise abdeckt.

2. Airbaganordnung nach Anspruch 1, **dadurch gekennzeichnet, dass** das zusätzliche Flächenelement (8) mit der Schusskanalwand (9) und/oder mit der Airbagklappe (1) verbunden insbesondere verschweißt ist.

3. Airbaganordnung nach Anspruch 2, **dadurch gekennzeichnet, dass** das untere Ende des Flächenelements (8) mit dem unteren Ende der Schusskanalwand (9) formschlüssig verbunden ist.

4. Airbaganordnung nach Anspruch 3, **dadurch gekennzeichnet, dass** das untere Ende (8b) des Flächenelements (8) das untere Ende der Schusskanalwand (9) oder der Klappenstützwand (4) untergreift.

5. Airbaganordnung nach Anspruch 3 oder 4, **dadurch gekennzeichnet, dass** das Flächenelement (8) eine seitliche Zunge (8a) aufweist, die einen seitlichen Vorsprung (4a, 9a) der Schusskanalwand (9) oder der Klappenstützwand (4) hintergreift.

6. Airbaganordnung nach einem der vorherigen Ansprüche, **dadurch gekennzeichnet, dass** das Flächenelement (8) aus einem Verbundwerkstoff besteht mit mindestens einer Lage aus Kunststoffbändern oder -fasern insbesondere aus thermoplastischem Polypropylen oder Polyester.

7. Airbaganordnung nach Anspruch 6, **dadurch gekennzeichnet, dass** die Kunststoffbänder oder -fasern ein Gewebe bilden.

8. Airbaganordnung nach einem der vorherigen Ansprüche, **dadurch gekennzeichnet, dass** im Bereich der Gelenkstelle (11) das Flächenelement (8) ein Materialreservoir in Form einer Faltung oder Wellung (8e) längs der Gelenkstelle aufweist, durch die das Flächenelement (8) in seiner Länge nach außen hin streckbar ist.

9. Airbaganordnung nach einem der vorherigen Ansprüche, **dadurch gekennzeichnet, dass** die dem Prallkissen (7) zugewandte Außenfläche (8c) des Flächenelements (8) als Gleitfläche eine hohe Oberflächenglätte aufweist.

## Claims

1. Airbag assembly comprising an airbag passage opening which is arranged above the firing channel of the airbag and which is closed by at least one airbag flap (1) and a cover (2) made of plastic which is fastened, in particular moulded on, above the airbag flap (1), wherein the cover (2) has at least one predetermined breaking line (2a) at the edge of the airbag flap (1) in order to allow the airbag cushion (7) to deploy, and wherein the airbag flap (1) is connected in an integrally moulded manner to a flap supporting wall (4) via an articulation point (11), said supporting wall bearing in a fastened manner on the inner side of the firing channel wall (9), **characterized in that** lying in the firing channel, between the airbag cushion (7) and the airbag flap (1), is an additional surface element (8) which is in the form of a cover and which at least partially covers the airbag flap (1) and the inner side of the firing channel wall (9) .

2. Airbag assembly according to Claim 1, **characterized in that** the additional surface element (8) is connected, in particular welded, to the firing channel wall (9) and/or to the airbag flap (1).

3. Airbag assembly according to Claim 2, **characterized in that** the lower end of the surface element (8) is connected in a form-fitting manner to the lower end of the firing channel wall (9).

4. Airbag assembly according to Claim 3, **characterized in that** the lower end (8b) of the surface element (8) engages under the lower end of the firing channel wall (9) or of the flap supporting wall (4).

5. Airbag assembly according to Claim 3 or 4, **characterized in that** the surface element (8) has a lateral tongue (8a) which engages behind a lateral protrusion (4a, 9a) of the firing channel wall (9) or of the flap supporting wall (4).

6. Airbag assembly according to one of the preceding claims, **characterized in that** the surface element (8) is composed of a composite material comprising at least one layer of plastics bands or fibres in particular made of thermoplastic polypropylene or polyester.

7. Airbag assembly according to Claim 6, **characterized in that** the plastics bands or fibres form a woven fabric.

8. Airbag assembly according to one of the preceding claims, **characterized in that** in the region of the articulation point (11), the surface element (8) has a material reservoir in the form of a fold or corrugation (8e) along the articulation point, by way of which fold or corrugation the surface element (8) can be stretched outwardly in terms of its length.

9. Airbag assembly according to one of the preceding claims, **characterized in that**, as a sliding surface, the outer surface (8c) of the surface element (8) facing the impact cushion (7) has a high surface smoothness.

## Revendications

1. Système de sac gonflable pourvu d'une ouverture de passage de sac gonflable agencée au-dessus du canal d'éjection du sac gonflable, qui est fermée par au moins un volet de sac gonflable (1) et un couvercle (2) en matière plastique fixé, notamment injecté, au-dessus du volet de sac gonflable (1), le couvercle (2) présentant au moins une ligne de rupture prédéterminée (2a) au bord du volet de sac gonflable (1) pour permettre le déploiement du coussin gonflable (7), et le volet de sac gonflable (1) étant relié, en épousant sa forme, par l'intermédiaire d'un point d'articulation (11), à une paroi de support de volet (4), qui est fixée sur le côté intérieur de la paroi de canal d'éjection (9), **caractérisé en ce qu'**un élément de surface supplémentaire (8) en tant que cache, qui recouvre au moins partiellement le volet de sac gonflable (1) et le côté intérieur de la paroi de canal d'éjection (9), est inséré dans le canal d'éjection entre le coussin gonflable (7) et le volet de sac gonflable (1).

2. Système de sac gonflable selon la revendication 1, **caractérisé en ce que** l'élément de surface supplémentaire (8) est relié, notamment soudé, avec la paroi de canal d'éjection (9) et/ou avec le volet de sac gonflable (1).

3. Système de sac gonflable selon la revendication 2, **caractérisé en ce que** l'extrémité inférieure de l'élément de surface (8) est reliée par complémentarité de forme avec l'extrémité inférieure de la paroi de canal d'éjection (9).

4. Système de sac gonflable selon la revendication 3, **caractérisé en ce que** l'extrémité inférieure (8b) de l'élément de surface (8) vient en prise par dessous avec l'extrémité inférieure de la paroi de canal d'éjection (9) ou de la paroi de support de volet (4).

5. Système de sac gonflable selon la revendication 3 ou 4, **caractérisé en ce que** l'élément de surface (8) comprend une languette latérale (8a), qui vient en prise par dessous avec une protubérance latérale (4a, 9a) de la paroi de canal d'éjection (9) ou de la paroi de support de volet (4).

6. Système de sac gonflable selon l'une quelconque des revendications précédentes, **caractérisé en ce que** l'élément de surface (8) est constitué d'un matériau composite muni d'au moins une couche en bandes ou fibres de matière plastique, notamment en polypropylène thermoplastique ou polyester.

7. Système de sac gonflable selon la revendication 6, **caractérisé en ce que** les bandes ou fibres de matière plastique forment un tissu.

8. Système de sac gonflable selon l'une quelconque des revendications précédentes, **caractérisé en ce que**, dans la zone du point d'articulation (11), l'élément de surface (8) comprend un réservoir de matière sous la forme d'un pli ou d'une ondulation (8e) le long du point d'articulation, grâce auquel l'élément de surface (8) peut être étiré vers l'extérieur dans sa longueur.

9. Système de sac gonflable selon l'une quelconque des revendications précédentes, **caractérisé en ce que** la surface extérieure (8c) de l'élément de surface (8) tournée vers le coussin antichoc (7) présente en tant que surface de glissement un lissé de surface élevé.
